# EUROPEAN PATENT APPLICATION

(11) **EP 4 772 326 A1**
(43) Date of publication of application: **08.07.2026**
(21) Application number: 26166608.5
(22) Date of filing: 23.03.2026
(51) Int. Cl.: B29C 45/73, B29C 45/78

(54) **CONTROL METHOD FOR A HEATING DEVICE**

(30) Priority: 18.06.2025 IT 202500014533
(71) Applicant: Inglass S.p.A., 31020 San Polo di Piave (Treviso) (IT)
(72) Inventor: Bruniera, Pierangelo, 31020 San Polo di Piave (TV) (IT); Bisetto, Massimo, 31020 San Polo di Piave (TV) (IT); Nespolo, Filippo, 31020 San Polo di Piave (TV) (IT)
(74) Representative: Citron, Massimiliano

(57) **Abstract**

A control method is described for a heating device (10) placed inside an auxiliary cavity (18) that is formed in a mold plate, is bounded by side walls (24), and comprises a terminal wall (20) that delimits on the other side thereof a molding cavity for injection and molding of molten material. The method has the step of heating the terminal wall by the heating device as a function of a signal emitted by a temperature sensor (50) mounted to detect the temperature of the terminal wall.

## Description

The present invention relates to a control method for a heating device, a heating device for injection molding controllable by the method, and an injection molding mold comprising the heating device.

It is known that in the injection molding process there is a problem of defects such as halos or stains, or a so-called joining line, forming on the surface of the molded part. Conventionally, in order to eliminate the formation of the joining line, it has been proposed to locally heat the mold with a nearly point-like heat source.

In order to maintain the molding cycle times unchanged, it is necessary to quickly heat and cool the mold in the same area. See, for example, JP2007223168A or DE 102014114 772A1, which describe means for heating a wall of the molding cavity during injection molding in order to eliminate the surface defect. In order not to excessively prolong the injection cycle due to the additional heating and cooling phase, forced-cooling means and techniques are provided to speed up and localize the cooling of the heated cavity wall before the molded part is removed from the cavity by opening the mold.

However, the times and powers used for heating are established experimentally, by trial and error and based on the specific part to be molded. The time required to industrialize the molding process is lengthened, and in any case the point-like heating is not accurate.

The main object of the invention is to eliminate or mitigate the above-mentioned drawbacks by making a different device of the above-mentioned type.

At least one object is achieved by what is attached here in the claims.

One aspect of the invention is a control method for a heating device arranged inside an auxiliary cavity that
is formed in a mold plate,
is bounded by side walls, and
comprises a terminal wall which, on the opposite side (i.e. with respect to its thickness), delimits a molding cavity for the injection and molding of molten material;
with the step of heating the terminal wall by means of the heating device as a function of a signal emitted by a temperature sensor mounted for detecting the temperature of the terminal wall.

The control of the heating of the terminal wall may be carried out by controlling the relative position between the heating unit and the terminal wall and/or by regulating heat-generating means that operate to heat the terminal wall.

The terminal wall in particular forms the bottom of the cavity.

The terminal wall separates the auxiliary cavity from the molding cavity.

Another aspect of the invention is a heating device.

One embodiment envisages a heating device for heating a terminal wall of an auxiliary cavity that is obtained in a mold plate and bounded by side walls,
wherein the terminal wall delimits a molding cavity for the injection and molding of molten material,
comprising a heating unit mounted translatable between said side walls, preferably along an axis, to touch or not touch the terminal wall and heat it by contact; and
a temperature sensor for detecting the temperature of the terminal wall.

Not only is the heating device capable of heating the molding cavity on the opposite side to the injector, thus avoiding the formation of defects on the aesthetic side of the molded part, but thanks to the method and device, it is possible to bring the terminal wall precisely to a desired and controlled temperature. In general, the heating device may be used to heat any point in the molding cavity.

In one embodiment of the method, the heating device is movable and displaced towards the terminal wall to touch it; and the terminal wall is heated by direct contact with the heating device.

In one embodiment of the method:
the terminal wall is heated by direct contact with the heating unit; and/or
a force, preferably elastic, is exerted on the temperature sensor to push it towards, and keep it in constant contact with, the terminal wall; and/or
the temperature of the terminal wall is detected in real time by the temperature sensor and,
as a function of the signal emitted by the sensor, regulation in real time is performed of the temperature of the terminal wall, preferably to perform in real-time a feedback control of the temperature of the terminal wall;
   and/or
the temperature of the terminal wall is detected in real time by means of the temperature sensor and as a function of the signal emitted by the sensor heat generating means, e.g. installed in the heating device, are driven to regulate the temperature of the terminal wall in real time.

In one embodiment, the heating unit is mounted linearly translatable in the auxiliary cavity to touch or not touch the terminal wall and heat it by contact. However, other types of displacement are possible.

With the advantage of better detecting the temperature of the terminal wall and/or simplifying the mounting of the sensor inside the mold, in one embodiment the temperature sensor is
mounted inside the heating unit, and/or
inside or adjacent to the terminal wall.

With the same advantage, in one embodiment the temperature sensor is mounted partially inside the heating device, preferably inside the heating unit, so that a portion of the sensor protrudes from the heating device toward the terminal wall.

In one embodiment, the temperature sensor is mounted slidably inside the heating device, preferably inside the heating unit. This facilitates relative movement between the heating unit and the temperature sensor, favoring in particular a constant contact between the temperature sensor and the terminal wall. In particular, the temperature sensor is slidably mounted inside the heating device, preferably inside the heating unit, along the same direction of displacement as the heating unit.

In one embodiment the temperature sensor is mounted so as to be in permanent contact with the terminal wall, regardless for example the position of the heating unit inside the auxiliary cavity and/or regardless the relative position of the heating unit with respect to the terminal wall. The advantage is to minimize the detection error of the temperature sensor.

In one embodiment, which ensures constant contact between the temperature sensor and the terminal wall, the device comprises an elastic member, e.g. a spring, to push the temperature sensor toward the terminal wall, in particular to keep the temperature sensor in contact with the terminal wall.

Although the heating device can act as a carrier for heat from an external source toward the terminal wall, in one embodiment the device comprises heat generating means for generating heat within it and transferring it to the terminal wall.

In one embodiment, the device comprises an electronic circuit that is configured to detect the temperature of the terminal wall in real time via the temperature sensor and, as a function of the signal emitted by the sensor, the electronic circuit is adapted to perform the real-time regulation of the temperature of the terminal wall, preferably to perform the real-time feedback regulation of the temperature of the terminal wall.

In one embodiment, the device comprises an electronic circuit that is
connected to the temperature sensor and to the heat generating means, and
configured to drive said heat generating means in order to achieve a feedback regulation of the temperature of the terminal wall (i.e. configured to drive said heat generating means as a function of the signal emitted by the temperature sensor).

In one embodiment, the device comprises an electronic circuit that is
connected to the temperature sensor and the actuator, and
configured to drive the actuator in order to regulate the linear position of the heating unit along said axis and thus the condition of contact between the heating unit and the terminal wall.

In one embodiment, said electronic circuit may be installed remotely with respect of the heating device, to avoid overheating it and compromising its operation. In particular, said electronic circuit may be installed in/on the mold or outside the mold, at less severe temperatures and conditions.

In particular, said electronic circuit may be connected or integrated with the electronic control unit of the hot runner or the press, and controlled by them.

In one embodiment, the device comprises a second temperature sensor adapted to detect the temperature of said heat generating means, with the advantage of precisely controlling the heat developed by the heat generating means. In one embodiment, said electronic circuit is connected to the second sensor to regulate the thermal power developed by the heat generating means.

In one embodiment, the heating device comprises a tubular insulating member mounted in the auxiliary cavity to cover its side walls, leaving a gap between the side walls and the insulating member.

Preferably, the heating device comprises two cooling channels inside the plate that open at the gap so as to allow a circulation of fluid in the gap and around the insulating member.

In one embodiment, the insulating member is cup-shaped.

In one embodiment, the insulating member has the shape of a cup whose outer surface exhibits two recesses positioned in front of the outlets of the cooling channels; and/or
whose bottom exhibits a narrowing of cross-section and the auxiliary cavity is substantially cylindrical in shape.

In one embodiment, the insulating member is hollow in the center to define a central cavity, and
the heating unit is mounted translatable within the central cavity.

In one embodiment, the relative dimensions of the insulating member and the heating unit are such that between the outermost surface of the heating unit and the innermost surface of the insulating member there remains an empty gap.

In one embodiment, one or each of said gaps has the volume of a toroid.

In one embodiment, one or each temperature sensor is a thermocouple. Other types of temperature sensors are also possible, e.g. an NTC or PTC component, a thermo-resistance, an infrared sensor, an optical pyrometer, or an LM35CZ-type integrated circuit.

In one embodiment, the heating device is located at an opposite point with respect to a molten material injector and is preferably mounted coaxially with respect to the injector.

In one embodiment, the heating device is installed between three mold plates that are mounted on top of each other in a sandwich configuration along an axis,
namely an innermost plate, an outermost plate, and an intermediate plate, wherein
the innermost plate faces a molten material injector, the innermost plate forming the surface of the molding cavity opposite a molten material injection point; and
the outermost plate comprises fixing means for an actuator which is adapted to translate the heating device.

In one embodiment, the intermediate plate comprises a cavity, communicating with the auxiliary cavity, in which to house the heating device.

In one embodiment, the heating device comprises along said axis in the order
an actuator,
connecting means for connecting a movable central body and the actuator so that the actuator can displace the central body,
the central body, and
a stationary insulating member, preferably tubular in shape, e.g. such as a bushing.

In one embodiment, the central body comprises along said axis the assembly of
a heating unit, facing the terminal wall,
a guide member, further axially from the terminal wall; and
guiding means mounted in the intermediate plate,
the guiding member being slidably coupled with the guide means to translate the heating unit toward the terminal wall.

In one embodiment, the insulating member has a through-opening on its bottom, so as to provide access to the terminal wall.

In one embodiment, the central body is arranged along said axis coaxially with the insulating member, and is displaceable along said axis coaxially with the insulating member between two positions:
- a first position in which the heating unit is completely contained by the insulating member and is detached from the terminal wall; and
- a second position in which the heating unit passes through the opening in the insulating member and touches the terminal wall.

In one embodiment, the actuator is mounted externally to and on the first plate.

In one embodiment, the electronic circuit is also connected to the second temperature sensor (e.g. via an electrical line) and is preferably adapted to feedback control the temperature of the heat generating means and/or the terminal wall as a function of the signal emitted by the second temperature sensor.

In one embodiment, the insulating member and the heating unit have relative dimensions such that between the heating unit and the insulating member there is always an air gap or air chamber with the function of thermal insulation.

In one embodiment, the outer surface of the insulating member is shaped so that between the insulating member and the walls of the auxiliary cavity there remains an air gap or chamber acting as thermal insulation.

In one embodiment, the electronic circuit is adapted to simultaneously control the heat emitted by the heat generating means and the flow rate of a cooling fluid inside the cooling channels.

Each of the above-defined variants may be implemented alone or in combination with one or each of the others.

It should be noted that all embodiments relating to the tubular insulating member may also be implemented in isolation (i.e. not necessarily linked to the presence of a temperature sensor in the heating device) to solve the problem of thermal insulation between the heating unit and the auxiliary cavity and/or the problem of rapid cooling of the terminal wall.

In one embodiment of the invention, the aforementioned heating device is used to implement the method.

The advantages of the invention will be further clarified by preferred embodiments described below with reference to the attached drawings, in which:

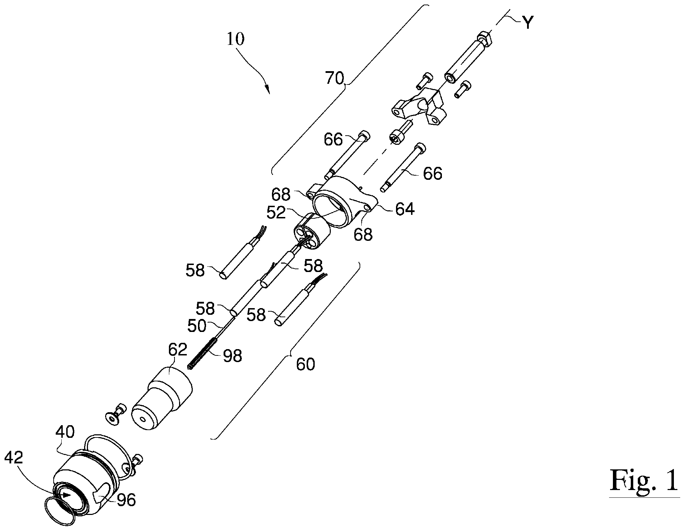

- Figure 1 shows an exploded view of a heating device;
- Figure 2 shows a vertical cross-sectional view of the heating device as installed in a mold;
- Figure 3 shows the same cross-sectional view as Figure 2 for a different operating configuration of the heating device;
- Figure 4 shows a cross-sectional view of the heating device according to a vertical plane different from Figures 2 and 3.

Identical numbers in the figures indicate identical or substantially identical parts. In order not to crowd the drawings, identical members are sometimes not numbered.

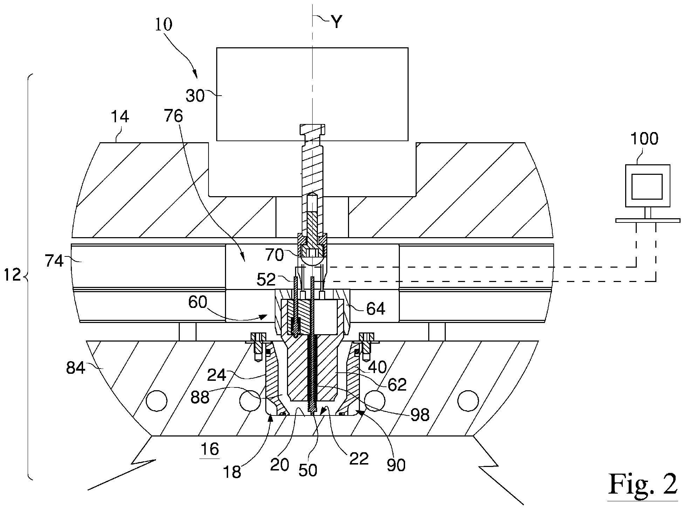

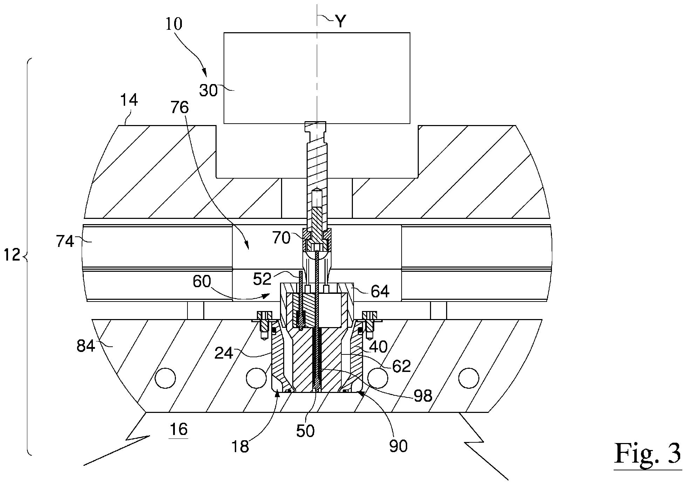

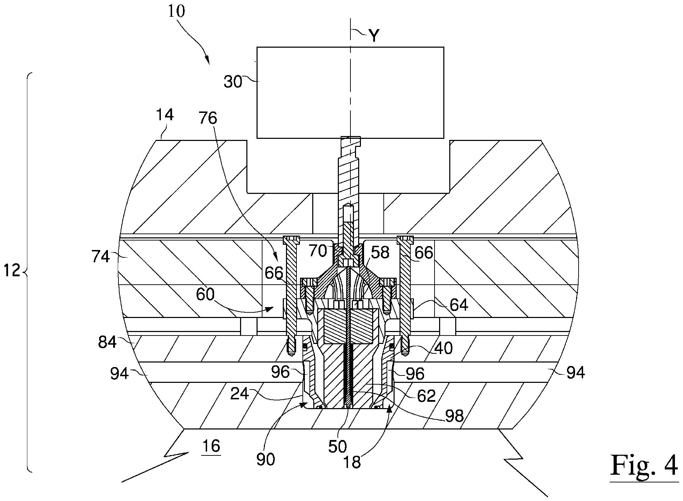

Figs. 2-4 show a heating device 10 installed in a mold 12 having a molding cavity 16.

The heating device 10 serves to heat the material inlet area in the molding cavity 16, so it is preferably located at an opposite point with respect to a molten material injector (not shown) and is preferably mounted coaxially with respect to the injector. However, the heating device 10 may also be used in other areas of the molding cavity 16.

In one embodiment, the heating device 10 is installed between three plates 14, 74, 84 of the mold 12 which are mounted one on top of the other along a Y-axis.

The plate 84, the innermost plate, faces a molten material injector (not shown), i.e. the plate 84 forms the surface of the molding cavity 16 opposite a molten material injection point.

The plate 14 is the outermost plate, while the plate 74 is sandwiched between plate 14 and plate 84.

To facilitate the mounting of the heating device 10 and the transfer of heat to the molding cavity 16, the plate 84 comprises an auxiliary cavity 18 having side walls 24 and a terminal wall 20. The terminal wall 20 has a surface 22 which is the target area to be heated by the heating device 10.

The thickness of the plate 84 at the surface 22 is the part of the plate 84 on which the device 10 acts.

To facilitate the assembly and housing of the heating device 10, the plate 74 comprises a cavity 76 communicating with the auxiliary cavity 18.

In one embodiment, the heating device 10 along the Y-axis comprises in the order:
an actuator 30 (e.g. pneumatic, hydraulic, or electric),
connecting means 70 between a movable central body 60 and the actuator 30.
the central body 60, and
a stationary insulating member 40, preferably tubular in shape, e.g. as a bushing.

The central body 60 in turn comprises along Y the assembly of
a heating unit 62, facing the terminal wall 20, and
a guide member 64, further away axially from the terminal wall 20.

The heating unit 62 is located mainly inside the auxiliary cavity 18 and the insulating member 40, while the guide member 64 remains outside the auxiliary cavity 18 and is housed completely in the cavity 76.

In one embodiment, the device 10 comprises guiding means mounted in the intermediate plate 74, and the guide member 64 is slidably coupled to the guiding means to translate the heating unit 62 toward the terminal wall 20.

In one embodiment, the guiding means comprise parallel columns 66 extending along Y in the cavity 76 around the central body 60. The guide member 64 has through-holes 68 into which the columns 66 are slidably inserted, so that the central body 60 can be translated along Y.

In one embodiment, the insulating member 40 is cup- or shell-shaped, preferably shaped as a cylindrical shell, and is fitted snugly inside the auxiliary cavity 18 so as to touch externally and cover the side walls 24.

In one embodiment, the insulating member 40 has a pass-through opening 42 at its bottom, so as to give access to the terminal wall 20. Sealing gaskets (not numbered) are preferably provided at the upper and lower ends in contact with the plate 84.

The central body 60 is arranged along Y coaxially with the insulating member 40, and is displaceable along Y coaxially with the insulating member 40 between two positions:
- a first position in which the heating unit 62 is completely contained by the insulating member 40 and is detached from the surface 22; and
- a second position in which the heating unit 62, through the opening 42, touches the surface 22.

Preferably, cartridges or heat generating means 58, e.g. electrical resistors, are inserted inside the heating unit 62.

In one embodiment, the heating unit 62 comprises a temperature sensor 52, e.g. a thermocouple, for detecting the temperature of the cartridges or the heat generating means 58. Preferably, the temperature sensor 52 is arranged inside the heating unit 62.

The device 10 comprises a temperature sensor 50, e.g. a thermocouple, adapted to measure the temperature of the surface 22 in real time.

In one embodiment, the temperature sensor 50 is mounted in the central body 60 to pass through the heating unit 62 along Y and remain always in direct contact with the surface 22 independently of the position along Y of the central body 60.

In one embodiment, the device 10 comprises an elastic member 98, e.g. a coil spring, mounted to push the temperature sensor 50 and keep it always in constant contact with the surface 22.

The actuator 30 is mounted externally to the plate 14 and is coupled to the connecting means 70, which pass through the thickness of the plate 74 and are fixed to the guide member 64.

Through the action of the actuator 30, the connecting means 70 and the guide member 64 can be translated along Y, thereby obtaining the translation of the entire central body 60 along Y parallel to the columns 66 between the first and second position.

It follows from the above that, thanks to the actuator 30, the heating unit 62 can also be moved along Y in the auxiliary cavity 18 without ever touching the insulating member 40 but moving closer to or further away from the surface 22. When the heating unit 62 is in the second position, the surface 22 is heated by transferring to it the heat generated by the cartridges or heat-generating means 58.

The temperature sensor 50 advantageously allows real-time control of the temperature of the surface 22.

Preferably, the heating device 10 is controlled by an electronic circuit 100 that is connected to the temperature sensor 50 (via an electrical line, shown in dotted lines) and electrically drives the cartridges or heat generating means 58.

Preferably, the electronic circuit 100 is adapted to detect the temperature of the surface 22 in real time via the temperature sensor 50. As a function of the signal emitted by the sensor 50 the electronic circuit 100 is adapted to control the temperature of the surface 22 in real time, in particular by adapting the activation and deactivation strategies of the device 10 to the environmental and process conditions.

Preferably, the electronic circuit 100 is adapted to perform real-time feedback control of the temperature of the surface 22 by the driving
of the cartridges or the heat generating means 58, in order to vary the amount of heat produced by them, and/or
of the actuator 30, in order to regulate the linear position of the heating unit 62 along Y and therefore the contact condition between the heating unit 62 and the surface 22.

This allows for a precise and accurate control of the temperature of the surface 22, no longer linked to empirical adjustments or time-based attempts (lag or lead of heating) as in the prior art.

In one embodiment, the electronic circuit 100 is also connected to the temperature sensor 52 (via an electrical line, shown in dotted lines) and is adapted to feedback control the temperature of the cartridges or the heat generating means 58 and/or the surface 22 as a function of the signal emitted by the temperature sensor 52.

In one embodiment, the insulating member 40 and the heating unit 62 have relative dimensions such that there is always an air gap or air chamber 88 between the heating unit 62 and the insulating member 40, with function of thermal insulation.

The purpose of such structure is to prevent the heat generated by the cartridges or heat-generating means 58 from being dispersed and to convey it towards the surface 22, preventing lateral heat dispersion and dispersion towards the plate 84, whose substantial mass absorbs a great amount of heat.

In one embodiment, the outer surface of the insulating member 40 is shaped so that a cavity or air chamber 90 remains between the insulating member 40 and the walls of the auxiliary cavity 18, with a function of thermal insulation. The gap preferably includes the entire perimeter of the cavity 18.

In one embodiment, cooling channels 94, preferably obtained in the plate 84, open into the auxiliary cavity 18.

The cooling channels 94 serve to circulate cooling fluid (e.g. water) inside the cavity or air chamber 90.

In one embodiment, the outer surface of the insulating member 40 has two recesses 96 positioned opposite the outlets of the cooling channels 94 to create and/or enlarge the air gap or air chamber 90. In this way, it is possible to connect the lateral cooling channels 94 to each other.

In one embodiment, in which the temperature control of the surface 22 is more precise, the electronic circuit 100 is adapted to simultaneously control the heat emitted by the cartridges or heat-generating means 58 and the flow rate of a cooling fluid inside the cooling channels 94.

The fluid has the ability to remove heat from an area that does not require heating, allowing faster cycle times to be set/achieved (adequate to what is required).

In one embodiment, the electronic circuit 100 also integrate an injection process management program, or is integrated directly into an injection press.

## Claims

1. Control method for a heating device placed inside an auxiliary cavity that is formed in a mold plate,
is bounded by side walls, and
comprises a terminal wall that delimits on the other side thereof a molding cavity for injection and molding of molten material;
with the step of heating the terminal wall by the heating device as a function of a signal emitted by a temperature sensor mounted to detect the temperature of the terminal wall.

2. Method according to claim 1, wherein the heating device is moved toward the terminal wall to touch it, and the terminal wall is heated by direct contact with the heating device.

3. Method according to any preceding claim, wherein a force, preferably elastic, is exerted on the temperature sensor to push it toward, and keep it always in contact with, the terminal wall.

4. Method according to any preceding claim, wherein
the temperature of the terminal wall is sensed in real time by the temperature sensor, and
as a function of the signal emitted by the sensor, real-time adjustment of the temperature of the terminal wall is performed, preferably by performing real-time feedback control of the temperature of the terminal wall.

5. Method according to any preceding claim, wherein the temperature of the terminal wall is sensed in real time by means of the temperature sensor, and as a function of the signal emitted by the sensor, heat generating means installed in the heating device are driven to adjust the temperature of the terminal wall in real time.

6. Heating device for carrying out the method of any preceding claim by heating a terminal wall of an auxiliary cavity that is formed in a mold plate and bounded by side walls,
wherein the terminal wall delimits on the other side thereof a mold cavity for injection and molding of molten material,
the device comprising:
a heating unit mounted translatable between said side walls, preferably along an axis, to touch or not touch the terminal wall and heat it by contact; and
a temperature sensor to detect the temperature of the terminal wall.

7. Device according to claim 6, wherein the temperature sensor is mounted inside the heating unit.

8. Device according to claim 6 or 7, wherein the temperature sensor is mounted inside or adjacent the terminal wall.

9. Device according to claim 6 or 7 or 8, wherein the temperature sensor is mounted partially inside the heating device, preferably inside the heating unit, so that a portion of the sensor protrudes from the heating device toward the terminal wall.

10. Device according to claim 6 or 7 or 8 or 9, wherein the temperature sensor is slidingly mounted within the heating device.
